# EUROPEAN PATENT SPECIFICATION

(11) **EP 3 937 095 B1**
(45) Date of publication and mention of the grant of the patent: **01.01.2025**
(21) Application number: 20184380.2
(22) Date of filing: 07.07.2020
(51) Int. Cl.: G06Q 10/00

(54) **DETERMINING CONTRACTUAL OUTPUT DATA IN RESPONSE TO A CONTRACTUAL REQUEST**
BESTIMMUNG VON VERTRAGSAUSGANGSDATEN IN ABHÄNGIGKEIT VON EINER VERTRAGSANFRAGE
DÉTERMINATION DE DONNÉES DE SORTIE CONTRACTUELLES EN RÉPONSE À UNE REQUÊTE CONTRACTUELLE

(43) Date of publication of application: 12.01.2022
(73) Proprietor: Siemens Aktiengesellschaft, 80333 München (DE)
(72) Inventor: Joanni, Andreas, 80337 München (DE); Ratiu, Daniel, 80997 München (DE)
(74) Representative: Siemens Patent Attorneys

(56) References cited:
- US-A1- 2003 093 340
- US-A1- 2004 193 460
- US-A1- 2020 184 556

## Description

### 1. Technical field

The present invention relates to a computer-implemented method for determining contractual output data in response to a contractual request. Further, the invention relates to a corresponding technical unit and a computer program product.

### 2. Prior art

Currently there is a trend of digitalization in the industry domain. Hence, e.g. a manufacturing process for a product may be digitally controlled. For describing several facets of this trend, the term "Industry 4.0" (in German: "Industrie 4.0") is a commonly used term. It has become not only a major part of today's industry, but it also drives the business in many industrial domains.

Considering complex industrial plants, the industrial plants usually comprise distinct parts, modules or units with a multiplicity of individual functions. Exemplary units include sensors and actuators. The units and functions have to be controlled and regulated in an interacting manner. They are often monitored, controlled and regulated by automation systems, for example the Simatic system of Siemens AG. The units can either exchange data directly with one another or communicate via a bus system. The units are connected to the bus system via parallel or, more often, serial interfaces.

The increasing degree of digitalization allows for manufacturing or industrial installation of products in a production line of the industrial plant to be performed by robot units or other autonomous units in an automatic manner and thus efficiently at least in part up to now.

However, with the increasing degree of digitalization it remains a challenge to manufacture enough products meeting the customer demand, but without incurring an excess of products or without an unfavorable production sequence of products and, hence, unnecessary costs.

A further challenge lies in the optimal selection of the type, sequence and the number of products, in particular the raw products or other inventory items in e.g. warehouses of industrial plants. This selection has to be optimized to minimize both warehousing and consequential costs. These factors are severely influenced by contractual terms of a contract e.g. stipulated by a supplier.

Thereby, a contract can be interpreted in the common sense of the term as a legally binding agreement between two contractual parties, e.g. a manufacturer, the aforementioned supplier and a customer. Accordingly, the contracts can be split e.g. into supplier contracts and customer contracts. Examples of such contracts are listed further below. Further, the contract specifies the contractual object and further circumstances in the form of the aforementioned contractual terms, such as delivery date and warranty. In other words, the contract in this case involves the exchange of the contractual object, such as a manufactured product or raw product.

The contract specifies the rights and obligations of the parties to the agreement. The contract can be legally enforceable because it meets the requirements and approval of the law. In the event of breach of contract, the law awards the injured party access to such as damages and cancellation.

Referring to the exemplary product as contractual object, the manufacturer agrees to deliver the product to the customer at an agreed delivery date and in the agreed quality, which is defined in the contract. The customer has to pay an agreed price for the delivered product, which is also defined in the contract.

Further exemplary contractual terms are listed in the following. The product types, such as raw product or end-product are each marked with P in the following for simplification and better understanding.
- Price: if the market price for a raw product P is currently low and storage space is available, then the inventory might be up-front increased via pre-orders. This can also be influenced by the expected demand for the raw product P.
- Warranty: if the warranty period of the raw product P commences when they are supplied to the manufacturer and the duration of the warranty period is close to or shorter than the one of the warranty provided to the end customer, then having too an high inventory would lead to gaps in back-to-back coverage because of increased storage duration of raw products. For example, in this case, the manufacturer could possibly be liable for warranty but cannot claim it from the supplier.
- Penalty: If the end-product P is provided to the customer after the agreed delivery date or the required throughput is not met, then this may incur penalties or liquidated damages.

The contractual terms can also be subject to negotiation between the manufacturer and the suppliers, or a choice can be made among possible suppliers offering the same type of raw products but with different contractual terms.

According to prior art, the production lines of the industrial plants are configured based mainly on technical concerns like e.g. the manufacturing of end-product P needs amount Y of raw product. The contractual criteria in the form of the contractual terms are not dealt with in an integrated and automated manner by the industrial plant and essential aspects are neglected in prior art.

The reason is the following:
Prior art approaches use incomplete, insufficient and oversimplified means for modeling and evaluation since the known approaches cannot deal with the complex interrelations of contractual, commercial and production aspects. For instance, the decision of prioritization of feedstock planning and production activities is usually achieved by persons in charge who rely on past experience and best practice up to now. Thus, the manual feedstock planning is error-prone since it relies on the subjective experience.

Hence, in other words, approaches according to prior art tend to be overly simplified, informal and thereby do not support the complexity of today's smart and distributed production lines.

It is therefore an objective of the present invention to provide a computer-implemented method for determining contractual output data in response to a contract request in an efficient and reliable manner.

Document US 2004/193460 relates to a contractual terms determining method for product e.g. tire, manufacturing company, involves determining contractual term and governing performance of engineering company, consumer and operating company.

Document US 2003/093340 relates to a supply chain execution system that has server executing out-sourced supply chain tool with network links to manufacturing division and trading partner systems. Document US 2020/184556 relates to a system used for enabling lending transactions, has crowd sourcing request circuit structured to construct no less than one parameter of crowd sourcing request.

### 3. Summary of the invention

This problem is according to one aspect of the invention solved by a computer-implemented method for determining contractual output data in response to a contractual request, comprising the steps
a. Receiving the contractual request with at least one specified contractual requirement to be met requesting the contractual output data;
b. Providing a plurality of contracts or contractual alternatives of at least one contract about a contractual object; wherein
c. each contract is defined in a domain-specific language; wherein
d. each contract comprises at least one contractual term regarding the respective contractual object;
e. Providing technical information regarding an industrial plant or associated unit; wherein
f. the technical information is defined in a domain-specific language;
g. Determining the contractual output data in response to the received contractual request using an optimization algorithm based on the plurality of contracts or the contractual alternatives and the technical information in accordance with the contract request and specified contractual requirement; and
h. Providing the determined contractual output data.

Accordingly, the invention is directed to a method for determining contractual output data in response to a contractual request in context of Industry 4.0 and industrial plants. The contractual request can be directed to requesting one or more contracts or other contractual information meeting the specified contractual requirement. Preferred embodiments are explained further below. Hence, the contractual output data, in this case, comprises the requested contract or any other information related to the contract or technical information.

In the first steps a. to e., the input data sets are provided or received as input for the optimization step g., namely the contractual request with the respective specified contractual requirement, contracts and technical information. The contracts and technical information are defined in a domain-specific language. The input data sets can be received and/or transmitted via one or more interfaces of a technical unit, wherein the technical unit can be designed as any computing unit.

The contractual requirement can be considered as condition, term or clause which has to be fulfilled. This contractual requirement can be defined or specified by a user, such as an expert in the field of Industry 4.0 and hence industrial plants. For example, the expert can request the contractual output data for diverse use cases, which are explained further below. Thus, the contractual output data can depend on the contractual request.

The contracts can be predefined, stored in a storage unit and/or retrieved from the storage unit as kind of reference data or templates.

The technical information can comprise any information related to or associated with any plant or device. Preferably, the plant is allocated to the field of Industry 4.0 and is hence an industrial plant. For example, the technical information can describe the required number and type of raw products to manufacture the end product including information like the risk of a warranty claim from the customer, or the possible number of manufactured end products per unit time.

These input data sets are used to determine and provide the contractual output data in response to the received contractual request using an optimization algorithm. Examples of such an optimization algorithm include linear or nonlinear optimization algorithms, where the objective function is the expected profit gained by the manufacturer from executing a given production order, and the optimization variables is the offered warranty duration, or the offered order price. In this context, constraints on the optimization variables like e.g. legal requirements on the minimum warranty duration may apply. If the sequence of raw materials selected from the inventory is subject to optimization, then this may represent a mixed-integer optimization program. Thereby, the optimization is performed in the manner that the contractual output data meet contract request and the specified contractual requirement.

In one aspect the contractual object is a product of a production line of an industrial plant or other item regarding industrial manufacturing or industrial installation.

In another aspect the plurality of contracts comprises at least one contract between at least two parties selected from the group comprising:
a supplier contract; wherein
the supplier contract is a contract between at least one manufacturer of the contractual object and at least one supplier; and
a customer contract; wherein
the customer contract is a contract between at least one customer and at least one manufacturer of the contractual object. Accordingly, the contract type can be selected in a flexible manner according to the specific application case, underlying technical system and user requirements.

In another aspect the contractual output data comprises at least one data element selected from the group comprising:
a contract of the plurality of contracts meeting the at least one specified contractual requirement of the contractual request and other related contractual data of the contract, in particular
a contractual party or contractual term. Accordingly, the contractual output data can be selected in a flexible manner according to the specific application case, underlying technical system and user requirements. In particular, referring to the above, the output can depend on the input e.g. requirement.

In another aspect the at least one contractual term is a term selected from the group comprising:
date of delivery, liquidated damage, penalty in case of delayed delivery, price of the contractual object, related costs, amount of the contractual object and duration of a warranty period. Accordingly, the contractual term can be selected in a flexible manner according to the specific application case, underlying technical system and user requirements.

In another aspect, the at least one specified contractual requirement is a requirement selected from the group comprising:
specified date of delivery, specified liquidated damage, or penalty in case of a delayed delivery, specified price of the contractual object, specified amount of the contractual object and specified duration of a warranty period.

In another aspect the adaptation is an increase, decrease, extension or limitation of the contractual requirement.

In another aspect the contractual requirement is a contract option or any other constraint.

In another aspect the adaptation is an addition or removal of the contract option or any other constraint to the contract or from the contract. Accordingly, the contractual requirement can also be an option, which can be flexibly added or removed according to the specific application case, underlying technical system and user requirements.

In another aspect the method further comprises the step of performing at least one action.

In another aspect at least one action is selected from the group, comprising:
- Outputting the determined contractual output data and/or any other related data;
- Storing the determined contractual output data and/or any other related data;
- Displaying the determined contractual output data and/or any other related data;
- Transmitting the determined contractual output data and/or any other related data to a technical unit; wherein the technical unit is adapted to manufacture or install the target entity in a production line of an industrial plant in accordance with the determined contractual output data;
- Manufacturing or Installing the contractual object associated with the determined contractual output data in a production line of the industrial plant in accordance with the determined contractual output data and/or any other related data; and
- Evaluating the determined contractual output data and/or any other related data.

Accordingly, the input data, data of intermediate method steps and/or resulting output data can be further handled. The output data is in particular the contractual output data. The output data can additionally comprise part of the input data e.g. contractual request, contractual requirement and details about the optimization. One or more actions can be performed. The action can be equally referred to as measure.

These actions can be performed by one or more technical units, such as computing unit or robot unit. The actions can be performed gradually or simultaneously. Actions include e.g. storing and processing steps. The advantage is that appropriate actions can be performed in a timely manner.

According to one preferred use case, the contractual object can be manufactured and/or installed in a production line of an industrial plant in an autonomous manner and in line or in accordance with the contractual output data. Moreover, according to one preferred use case, the industrial plant or its units can be designed or planned in accordance with the contractual output data. According to another preferred use case, the raw material can be selected from the inventory in accordance with the contractual output data. According to a yet another preferred use case, the raw material can be manufactured by suppliers with properties as specified by contractual requirements that are in accordance with the contractual output data.

A further aspect of the invention is a technical unit for performing the aforementioned method.

The technical unit may be realized as any device, or any means, for computing, in particular for executing a software, an app, or an algorithm. For example, the unit may comprise a central processing unit (CPU) and a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

A further aspect of the invention is a computer program product directly loadable into an internal memory of a computer, comprising software code portions for performing the steps according to the aforementioned method when said computer program product is running on a computer.

### 4. Short description of the drawings

In the following detailed description, presently preferred embodiments of the invention are further described with reference to the following figures:

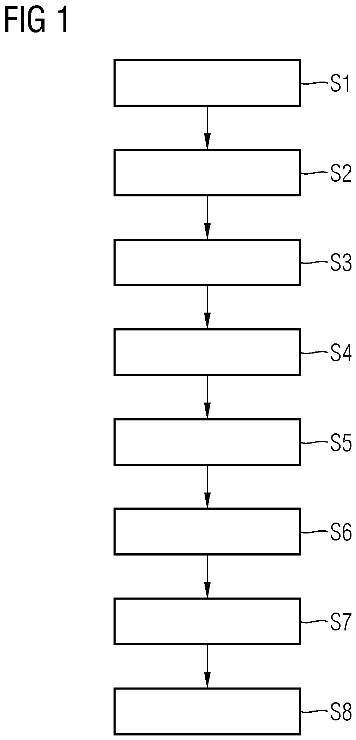

Fig. 1. illustrates a flowchart of the method according to the invention.

### 5. Detailed description of preferred embodiments

Fig. 1 illustrates a flowchart of the method according to the invention with the method steps S1 to S8. The method steps will be explained in the following in more detail.

### Input data

First, the contractual request and the contracts are received as input data S1 to S4. The contracts are contracts between at least two contractual parties A and B, e.g**.** supplier contracts and customer contracts about a contractual object P**.** Exemplary contracts are listed in the following. Moreover, technical information is provided as additional input data S5, S6.

Referring to the aforementioned preferred embodiment of an industrial plant, the technical information can be associated with the industrial plant itself or to its units, such as warehouse facility or other storage facility. More specifically, the technical information can comprise information about the size or storage capacity of the facility.

In other words, the input data comprises both the contractual information and the technical information.

This input data is used to determine and provide the optimized contractual output data in response to the received contractual request by means of optimization S7, S8.

### Supplier Contracts:

- Contractual party A can be offered a contractual object at a price of 100€ with a warranty of one month from the delivery date or at a price of 102€ with an extended warranty of 2 months from the delivery date. The optimal contractual alternative can as a result be provided as contractual output data.
- There is a contractual option to purchase up to 10.000 Li-Io batteries until 2022 at a price of 130€ per KWh. This contractual option can be added or removed to the contract or from the contract as result.

### Customer Contracts:

- Contractual party A agrees to deliver the product P to the contractual party B in maximum 48 hours with a warranty of one month, starting with the order entry for the end-product P. For each day of delay, a penalty of 100€ per end-product P will be charged by the customer. These agreed contractual terms are part of the contractual output data.
- The smart factory ensures that the production of the product P can be scaled up in two weeks up to a production of 10.000 units of product P per month, at an additional cost of 10€ per product P. These agreed contractual terms are part of the contractual output data.

Exemplary use cases are listed in the following:
Use cases:
- Determination of limitation of an inventory: For example, due to a given warranty duration of raw-product P, the inventory for pre-purchased items does not exceed 100 pieces to avoid warranty gaps. Hence, orders from supplier of P are placed such that the 100 pieces are not exceeded. Alternatively, the result of the optimization step could mean that an extended warranty for raw-product P is purchased and the number of pieces in the inventory is increased accordingly.
- Addition of an option: In order to ensure elasticity of production, the result of the optimization step determines whether an option contract for pre-purchasing batteries shall be placed.
- Adaptation of a production: The planned production is adapted in order to maximize new contractual requirements.

### Reference signs

S1 to S8 Method steps

## Claims

1. A computer-implemented method for determining optimized contractual output data in response to a contractual request, comprising the steps:
a. Receiving the contractual request with at least one specified contractual requirement to be met requesting the contractual output data (S1);
b. Providing a plurality of contracts or contractual alternatives of at least one contract about a contractual object (S2); wherein
c. each contract is defined in a domain-specific language (S3); wherein
d. each contract comprises at least one contractual term regarding the respective contractual object (S4);
e. Providing technical information regarding an industrial plant or associated unit (S5); wherein
f. the technical information is defined in a domain-specific language (S6);
**characterized in that**:
g. Determining contractual output data in response to the received contractual request using an optimization algorithm based on the plurality of contracts or the contractual alternatives and the technical information in accordance with the contract request and specified contractual requirement (S7);
h. Providing the determined contractual output data (S8) to a production line of the industrial plant; and
i. Manufacturing the contractual object associated with the determined contractual output data in the production line of the industrial plant in accordance with the determined contractual output data and any other related data, wherein the contractual object is a product of a production line of an industrial plant.

2. Method according to claim 1, wherein the plurality of contracts comprises at least one contract between at least two parties selected from the group comprising:
a supplier contract; wherein
the supplier contract is a contract between at least one manufacturer of the contractual object and at least one supplier; and
a customer contract; wherein
the customer contract is a contract between at least one customer and at least one manufacturer of the contractual object.

3. Method according to claim 2, wherein the contractual output data comprises at least one data element selected from the group comprising:
a contract of the plurality of contracts meeting the at least one specified contractual requirement of the contractual request and other related contractual data of the contract, comprising
a contractual party or contractual term.

4. Method according to any of the preceding claims, wherein the at least one contractual term is a term selected from the group comprising:
date of delivery, liquidated damage, penalty in case of delayed delivery, price of the contractual object, related costs, amount of the contractual object and duration of a warranty period.

5. Method according to any of the preceding claims, wherein the at least one specified contractual requirement is a requirement selected from the group comprising:
specified date of delivery, specified liquidated damage, or penalty in case of a delayed delivery, specified price of the contractual object, specified amount of the contractual object and specified duration of a warranty period.

6. Method according to claim 5, wherein adaptation of the at least one specified contractual requirement is an increase, decrease, extension or limitation of the contractual requirement.

7. Method according any of the preceding claims, wherein the at least one specified contractual requirement is a contract option or any other constraint.

8. Method according to claim 7, wherein adaptation of the at least one specified contractual requirement is an addition or removal of the contract option or any other constraint to the contract or from the contract.

9. Computer-implemented method according to any of the preceding claims, wherein the method further comprises the step of performing at least one action.

10. Computer-implemented method according to claim 9, wherein the at least one action is selected from the group, comprising:
- Outputting the determined contractual output data and/or any other related data;
- Storing the determined contractual output data and/or any other related data;
- Displaying the determined contractual output data and/or any other related data;
- Transmitting the determined contractual output data and/or any other related data to a technical unit; wherein
the technical unit is adapted to manufacture or install the target entity in a production line of an industrial plant in accordance with the determined contractual output data;
- Evaluating the determined contractual output data and/or any other related data.

11. A technical unit for performing the method steps according to any of the preceding claims.

12. A computer program product directly loadable into an internal memory of a computer, comprising software code portions for performing the steps according to any of the claims 1 to 10 when said computer program product is running on a computer.

## Patentansprüche

1. Computergestütztes Verfahren zum Bestimmen von optimierten vertraglichen Ausgabedaten als Reaktion auf eine vertragliche Anfrage, das folgende Schritte umfasst:
a. Empfangen der vertraglichen Anfrage mit mindestens einer genannten zu erfüllenden vertraglichen Anforderung und der Bitte um die vertraglichen Ausgabedaten (S1),
b. Bereitstellen mehrerer Verträge oder vertraglicher Alternativen zu mindestens einem Vertrag bezüglich eines Vertragsgegenstandes (S2), wobei
c. jeder Vertrag in einer fachspezifischen Sprache festgeschrieben ist (S3), wobei
d. jeder Vertrag mindestens eine Vertragsbestimmung bezüglich des jeweiligen Vertragsgegenstandes umfasst (S4),
e. Bereitstellen technischer Angaben bezüglich einer Industrieanlage oder zugehörigen Einheit (S5), wobei
f. die technischen Angaben in einer fachspezifischen Sprache festgeschrieben sind (S6),
**dadurch gekennzeichnet, dass**:
g. Bestimmen von vertraglichen Ausgabedaten als Reaktion auf die empfangene vertragliche Anfrage unter Verwendung eines Optimierungsalgorithmus auf der Grundlage der mehreren Verträge oder vertraglichen Alternativen und der technischen Angaben entsprechend der vertraglichen Anfrage und der genannten vertraglichen Anforderung (S7),
h. Bereitstellen der bestimmten vertraglichen Ausgabedaten (S8) für einen Produktionsbereich der Industrieanlage und
i. Fertigen des mit den bestimmten vertraglichen Ausgabedaten verknüpften Vertragsgegenstandes in dem Produktionsbereich der Industrieanlage entsprechend den bestimmten vertraglichen Ausgabedaten und sämtlicher anderer damit zusammenhängender Daten, wobei es sich bei dem Vertragsgegenstand um ein Produkt eines Produktionsbereichs einer Industrieanlage handelt.

2. Verfahren nach Anspruch 1, wobei die mehreren Verträge mindestens einen Vertrag zwischen mindestens zwei Parteien umfassen, der aus der Gruppe ausgewählt wird, die Folgendes umfasst:
einen Lieferantenvertrag, wobei
es sich bei dem Lieferantenvertrag um einen Vertrag zwischen mindestens einem Hersteller des Vertragsgegenstandes und mindestens einem Lieferanten handelt, und
einen Kundenvertrag, wobei
es sich bei dem Kundenvertrag um einen Vertrag zwischen mindestens einem Kunden und mindestens einem Hersteller des Vertragsgegenstandes handelt.

3. Verfahren nach Anspruch 2, wobei die vertraglichen Ausgabedaten mindestens ein Datenelement umfassen, das aus der Gruppe ausgewählt wird, die Folgendes umfasst:
einen Vertrag unter den mehreren Verträgen, der die mindestens eine genannte vertragliche Anforderung der vertraglichen Anfrage erfüllt, und andere damit zusammenhängende Vertragsdaten aus dem Vertrag, die Folgendes umfassen:
eine Vertragspartei oder eine Vertragsbestimmung.

4. Verfahren nach einem der vorhergehenden Ansprüche, wobei es sich bei der mindestens einen Vertragsbestimmung um eine Bestimmung handelt, die aus der Gruppe ausgewählt ist, die Folgendes umfasst:
Lieferdatum, Schadensersatzpauschale, Vertragsstrafe bei Lieferverspätung, Preis des Vertragsgegenstandes, damit zusammenhängende Kosten, Menge des Vertragsgegenstandes und Dauer einer Gewährleistungsfrist.

5. Verfahren nach einem der vorhergehenden Ansprüche, wobei es sich bei der mindestens einen genannten vertraglichen Anforderung um eine Anforderung handelt, die aus der Gruppe ausgewählt ist, die Folgendes umfasst:
genannter Liefertermin, genannte Schadensersatzpauschale oder Vertragsstrafe bei Lieferverspätung, genannter Preis des Vertragsgegenstandes, genannte Menge des Vertragsgegenstandes und genannte Dauer einer Gewährleistungsfrist.

6. Verfahren nach Anspruch 5, wobei es sich bei einer Anpassung der mindestens einen genannten vertraglichen Anforderung um eine Erhöhung, eine Verringerung, eine Erweiterung oder eine Eingrenzung der vertraglichen Anforderung handelt.

7. Verfahren nach einem der vorhergehenden Ansprüche, wobei es sich bei der mindestens einen genannten vertraglichen Anforderung um eine Vertragsoption oder eine beliebige andere Einschränkung handelt.

8. Verfahren nach Anspruch 7, wobei es sich bei einer Anpassung der mindestens einen genannten vertraglichen Anforderung um ein Hinzufügen oder Entfernen der Vertragsoption oder einer beliebigen anderen Einschränkung zum Vertrag oder aus dem Vertrag handelt.

9. Computergestütztes Verfahren nach einem der vorhergehenden Ansprüche, wobei das Verfahren ferner das Durchführen mindestens einer Maßnahme umfasst.

10. Computergestütztes Verfahren nach Anspruch 9, wobei die mindestens eine Maßnahme aus der Gruppe ausgewählt ist, die Folgendes umfasst:
- Ausgeben der bestimmten vertraglichen Ausgabedaten und/oder sämtlicher anderer damit zusammenhängender Daten,
- Speichern der bestimmten vertraglichen Ausgabedaten und/oder sämtlicher anderer damit zusammenhängender Daten,
- Anzeigen der bestimmten vertraglichen Ausgabedaten und/oder sämtlicher anderer damit zusammenhängender Daten,
- Übertragen der bestimmten vertraglichen Ausgabedaten und/oder sämtlicher anderer damit zusammenhängender Daten zu einer technischen Einheit, wobei
die technische Einheit so ausgelegt ist, dass sie das Zielobjekt in einem Produktionsbereich einer Industrieanlage den bestimmten vertraglichen Ausgabedaten entsprechend fertigt oder installiert,
- Auswerten der bestimmten vertraglichen Ausgabedaten und/oder sämtlicher anderer damit zusammenhängender Daten.

11. Technische Einheit zum Durchführen der Verfahrensschritte nach einem der vorhergehenden Ansprüche.

12. Computerprogrammprodukt, das direkt in einen Arbeitsspeicher eines Computers geladen werden kann und Softwarecodeabschnitte umfasst, die die Schritte nach einem der Ansprüche 1 bis 10 ausführen, wenn das Computerprogrammprodukt auf einem Computer ausgeführt wird.

## Revendications

1. Procédé mis en œuvre par ordinateur destiné à déterminer des données de sortie contractuelles optimisées en réponse à une demande contractuelle, comprenant les étapes consistant à :
a. recevoir la demande contractuelle avec au moins une exigence contractuelle précisée à remplir demandant les données de sortie contractuelles (S1) ;
b. fournir une pluralité de contrats ou d'alternatives contractuelles d'au moins un contrat concernant un objet contractuel (S2) ; dans lequel
c. chaque contrat est défini dans une langue spécifique au domaine (S3) ; dans lequel
d. chaque contrat comprend au moins une clause contractuelle concernant l'objet contractuel respectif (S4) ;
e**.** fournir des informations techniques concernant un site industriel ou une unité associée (S5) ; dans lequel
f. les informations techniques sont définies dans une langue spécifique au domaine (S6) ;
**caractérisé en ce que** :
g. la détermination de données de sortie contractuelles en réponse à la demande contractuelle reçue à l'aide d'un algorithme d'optimisation basé sur la pluralité de contrats ou d'alternatives contractuelles et des informations techniques conformément à la demande de contrat et à l'exigence contractuelle précisée (S7) ;
h. la fourniture des données de sortie contractuelles déterminées (S8) à une chaîne de production du site industriel ;
i. la fabrication de l'objet contractuel associé aux données de sortie contractuelles déterminées dans la chaîne de production du site industriel conformément aux données de sortie contractuelles déterminées et à toute autre donnée associée, dans lequel l'objet contractuel est un produit d'une chaîne de production d'un site industriel.

2. Procédé selon la revendication 1, dans lequel la pluralité de contrats comprennent au moins un contrat entre au moins deux parties sélectionnées à partir du groupe comprenant :
un contrat de fournisseur ; dans lequel
le contrat de fournisseur est un contrat entre au moins un fabricant de l'objet contractuel et au moins un fournisseur,
et un contrat de client ; dans lequel
le contrat de client est un contrat entre au moins un client et au moins un fabricant de l'objet contractuel.

3. Procédé selon la revendication 2, dans lequel les données de sortie contractuelles comprennent au moins un élément de données sélectionné à partir du groupe comprenant :
un contrat de la pluralité de contrats remplissant l'au moins une exigence contractuelle précisée de la demande contractuelle et d'autres données contractuelles associées du contrat, comprenant
une partie contractuelle ou une clause contractuelle.

4. Procédé selon l'une quelconque des revendications précédentes, dans lequel l'au moins une clause contractuelle est une clause sélectionnée à partir du groupe comprenant :
la date de livraison, les dommages liquidés, les pénalités en cas de retard de livraison, le prix de l'objet contractuel, les coûts associés, la quantité de l'objet contractuel et la durée de la période de garantie.

5. Procédé selon l'une quelconque des revendications précédentes, dans lequel l'au moins une exigence contractuelle précisée est une exigence sélectionnée à partir du groupe comprenant :
la date de livraison précisée, les dommages liquidés précisés, ou les pénalités en cas de retard de livraison, le prix précisé de l'objet contractuel, la quantité précisée de l'objet contractuel et la durée précisée d'une période de garantie.

6. Procédé selon la revendication 5, dans lequel l'adaptation de l'au moins une exigence contractuelle précisée est une augmentation, une diminution, une extension ou une limitation de l'exigence contractuelle.

7. Procédé selon l'une quelconque des revendications précédentes, dans lequel l'au moins une exigence contractuelle précisée est une option de contrat ou toute autre contrainte.

8. Procédé selon la revendication 7, dans lequel l'adaptation de l'au moins une exigence contractuelle précisée est une addition ou une suppression de l'option de contrat ou tout autre contrainte au contrat ou émanant du contrat.

9. Procédé mis en œuvre par ordinateur selon l'une quelconque des revendications précédentes, dans lequel le procédé comprend en outre l'étape consistant à réaliser au moins une action.

10. Procédé mis en œuvre par ordinateur selon la revendication 9, dans lequel l'au moins une action est sélectionnée à partir du groupe, comprenant :
- la sortie des données de sortie contractuelles déterminées et/ou toutes autres données associées ;
- le stockage des données de sortie contractuelles déterminées et/ou de toutes autres données associées ;
- l'affichage des données de sortie contractuelles déterminées et/ou de toutes autres données associées ;
- la transmission des données de sortie contractuelles déterminées et/ou de toutes autres données associées à une unité technique ;
dans lequel l'unité technique est adaptée pour produire ou installer l'entité cible dans une chaîne de production d'un site industriel conformément aux données de sortie contractuelles déterminées ;
- l'évaluation des données de sortie contractuelles déterminées et/ou de toutes autres données associées.

11. Unité technique destinée à réaliser les étapes de procédé selon l'une quelconque des revendications précédentes.

12. Produit de programme informatique chargeable directement dans une mémoire interne d'un ordinateur, comprenant des parties de code de logiciel destinées à réaliser les étapes selon l'une quelconque des revendications 1 à 10 lorsque ledit produit de programme informatique s'exécute sur un ordinateur.
